# EUROPÄISCHE PATENTANMELDUNG

(11) **EP 1 983 598 A1**
(43) Veröffentlichungstag der Anmeldung: **22.10.2008**
(21) Anmeldenummer: 08007337.2
(22) Anmeldetag: 15.04.2008
(51) Int. Cl.: H01M 8/04, H01M 8/06

(54) **Brennstoffzellenanlage und Verfahren zum Betrieb einer Brennstoffzellenanlage**

(30) Priorität: 18.04.2007 DE 102007018705
(71) Anmelder: Viessmann Werke GmbH & Co. KG, 35107 Allendorf (DE)
(72) Erfinder: Pawlik, Jürgen, Dr., 35088 Battenberg (DE); Faulhaber, Sven, 44791 Bochum (DE)
(74) Vertreter: Wolf, Michael

(57) **Zusammenfassung**

Eine Brennstoffzellenanlage und ein Verfahren zum Betrieb dieser Anlage, umfassend eine Reformerstufe (1) zur Dampfreformierung von Kohlenwasserstoffgas und Wasserdampf in Wasserstoff und weitere Reformerprodukte, wobei der Reformerstufe (1) zur Erzeugung des Wasserdampfes ein Verdampfer (3) vorgeschaltet ist. Ferner weist die Anlage mindestens einen der Reformerstufe (1) nachgeschalteten, mit einem Mittel zur Kühlung versehenen Hochtemperatur-PEM-Brennstoffzellenstack (2) auf. Es ist vorgesehen, dass das Mittel zur Kühlung des Hochtemperatur-PEM-Brennstoffzellenstacks (2) thermisch mit dem Verdampfer (3) der Reformerstufe (1) verbunden ist. Somit kann Abwärme vom Hochtemperatur-PEM-Brennstoffzellenstack (2) dem Verdampfer (3) zur Erzeugung des Wasserdampfes für die Reformerstufe (1) zugeführt werden.

## Beschreibung

Die Erfindung betrifft eine Brennstoffzellenanlage gemäß dem Oberbegriff des Patentanspruchs 1 und ein Verfahren zum Betrieb einer Brennstoffzellenanlage gemäß dem Oberbegriff des Patentanspruchs 9.

Eine Brennstoffzellenanlage der eingangs genannten Art ist nach der DE 10 2004 013 337 A1 bekannt. Diese besteht aus einer Reformerstufe zur Dampfreformierung von Kohlenwasserstoffgas und Wasserdampf in Wasserstoff und weitere Reformerprodukte, wobei der Retormerstufe zur Erzeugung des wasserdampfes ein Verdampfer vorgeschaltet ist. Ferner umfasst die Brennstoffzellenanlage mindestens eine der Reformerstufe nachgeschaltete Shiftstufe zur chemischen Aufbereitung der Reformerprodukte (Reduktion des Kohlenmonoxidanteils) und mindestens einen der Shiftstufe nachgeschalteten, mit einem Mittel zur Kühlung versehenen Hochtemperatur-PEM-Brennstoffzellenstack.

Der Erfindung liegt die Aufgabe zugrunde, eine Brennstoffzellenanlage sowie ein Verfahren zum Betrieb dieser Anlage der eingangs genannten Art bezüglich ihres/seines Wirkungsgrades zu verbessern.

Diese Aufgabe ist gegenständlich durch die im Kennzeichen des Patentanspruchs 1 aufgeführten Merkmale gelöst. Verfahrensmässig lösen die kennzeichnenden Merkmale des Patentanspruchs 9 diese Aufgabe.

Nach der Erfindung ist also gegenständlich vorgesehen, dass das Mittel zur Kühlung des Hochtemperatur-PEM-Brennstoffzellenstacks thermisch mit dem Verdampfer der Reformerstufe verbunden ist. Verfahrensmäßig ist erfindungsgemäß entsprechend vorgesehen, dass Abwärme vom Hochtemperatur-PEM-ärennstoffzellenstack dem Verdampfer der Reformerstufe zur Erzeugung des Wasserdampfes zugeführt wird.

Mit anderen Worten ausgedrückt, wird erfindungsgemäß die Abwärme des Hochtemperatur-PEM-Brennstoffzellenstacks zur erforderlichen Verdampfung des der Reformerstufe zuzuführenden Wassers genutzt. Damit ist gleichzeitig eine energetische Entkopplung des Reformierungsprozesses von der Prozesswassererhitzung und -verdampfung erreicht, verbunden mit dem Vorteil, dass die dem Brenner für den Reformierungsprozess zuzuführende Leistung bzw. Brennstoffmenge reduziert werden kann. Ein Teil der am Hochtemperatur-PEM-Brennstoffzellenstack entstehenden Wärmeenergie wird somit unabhängig vom Wärmebedarf des Versorgungsobjekts (z. B. ein zu versorgendes Gebäude) dem Reformierungsprozess zugeführt und wird dementsprechend direkt wirksam in Hinblick auf eine Steigerung des elektrischen und auch des Gesamtwirkungsgrades des Sytems. Eine solche Wärmenutzung ist bei herkömmlichen Niedertempartur-PEM-Brennstoffzellenstacks nicht umsetzbar.

Andere vorteilhafte Weiterbildungen der Erfindung ergeben sich aus den abhängigen Patentansprüchen.

Der Vollständigkeit halber wird noch auf die DE 102 52 268 B4 hingewiesen. Bei dieser ist zur Vorheizung der Betriebsmedien (insbesondere des Prozesswassers) ein der Reformerstufe vorgeschalteter Wärmetauscher bzw. Verdampfer in einem Gehäuseteil untergebracht, der auch den Brenner des Reformierungsapparates aufnimmt. Eine Nutzung der Abwärme der Brennstoffzelle ist bei dieser Lösung dabei schon deswegen nicht offenbart bzw. angedacht, da bei dieser Lösung die Verwendung eines herkömmlichen Niedertemperatur-PEM-Brennstoffzellenstacks vorgesehen ist.

Die erfindungsgemäße Brennstoffzellenanlage sowie das Verfahren zum Betrieb einer solchen Brennstoffzellenanlage wird nachfolgend anhand der zeichnerischen Darstellung zweier bevorzugter Ausführungsbeispiele näher erläutert.

Es zeigt jeweils schematisch
- Figur 1: die erfindungsgemäße Brennstoffzellenanlage miL einem Hochtemperatur-PEM-Brennstoffzellenstack, der direkt zur Erwärmung und Verdampfung von der Reformerstufe zuzuführenden Wassers verwendet wird;
- Figur 2: eine vergrößerte Ansicht des Hochtemperatur-PEM-Brennstoffzellenstacks mit Kühlelementen; und
- Figur 3: eine alternative Ausbildung der Brennstoffzellenanlage mit einem Hochtemperatur-PEM-Brennstoffzellenstack, der zur indirekten Erwärmung über einen wärmetauscher zur Erwärmung und Verdampfung von der Reformerstufe zuzuführenden Wassers verwendet wird.

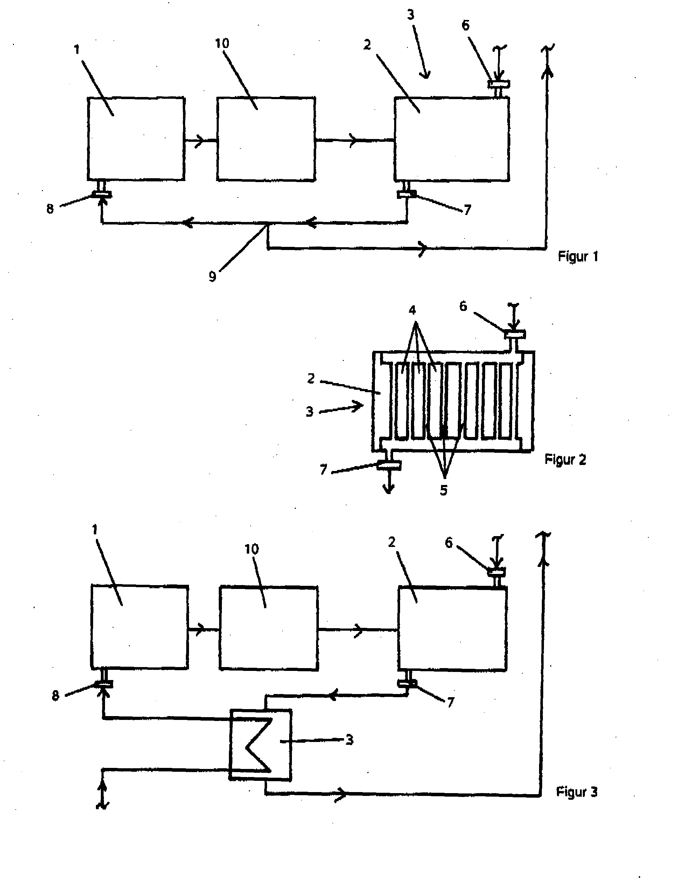

Die in den Figuren 1 und 3 dargestellten Brennstoffzellenanlagen bestehen beide zunächst aus einer an sich bekannten Reformerstufe 1 zur Dampfreformierung von Kohlenwasserstoffgas und Wasserdampf in Wasserstoff und weitere Reformerprodukte. Da die Anlage inbesondere für die Hausenergieversorgung vorgesehen ist, kommt als Kohlenwasserstoffgas insbesondere Erdgas in Betracht, dem zur Durchführung des Reformierungsprozesses, wie erwähnt, Wasserdampf zugeführt wird. Dieser Wasserdampf wird mit einem der Reformerstufe 1 vorgeschalteten Verdampfer 3 aus flüssigem Wasser erzeugt.

Aus der DE 100 57 537 A1 ist es beispielsweise bekannt, diesen Verdampfer 3 zwischen der Reformerstufe 1 und einer Shiftstufe 10, auf die nachfolgend noch eingegangen wird, anzuordnen, sprich die Wärme des Reformatgases an dieser Stelle auf das zu verdampfende Wasser zu übertragen.

Zur chemischen Aufbereitung der Reformerprodukte bzw. des Reformatgases ist, wie bereits angedeutet, zwischen der Reformerstufe 1 und dem Hochtemperatur-PEM-Brennstoffzellenstack 2 eine sogenannte Shiftstufe 10 vorgesehen, die zur Reduktion des Kohlenmonoxidanteils im Reformatgas dient, da eine zu große Menge an Kohlenmonoxid als sogenanntes Brennstoffzellengift zu einer Beschädigung oder sogar zur Zerstörung der PEM-Brennstoffzelle führen würde ("PEM" ist dabei stets die englische Schreibweise für eine Protonen-Austausch-Membran [Proton Exchange Membrane] die beispielsweise Verwendung in Niedertemperatur-, aber auch Hochtemperatur-Brennstoffzelle findet).

Ferner weisen die beiden in Figur 1 und 3 dargestellten Brennstoffzellenanlagen mindestens einen der Reformerstufe 1 bzw. der Shiftstufe 10 nachgeschalteten, mit einem Mittel zur Kühlung versehenen Hochtemperatur-PEM-Brennstoffzellenstack 2 auf.

Für alle Ausführungsformen der erfindungsgemäßen Brennstoffzellenanlage ist nun wesentlich, dass das Mittel zur Kühlung des Hochtemperatur-PEM-Brennstoffzellenstacks 2 thermisch mit dem Verdampfer 3 der Reformerstufe 1 verbunden ist. Verfahrensmäßig ausgedrückt, ist somit vorgesehen, dass Abwärme vom Hochtemperatur-PEM-Brennstoffzellenstack 2 dem Verdampfer 3 zur Erzeugung des Wasserdampfes für die Reformerstufe 1 zugeführt wird.

In diesem Zusammenhang ist mit Verweis auf die stark abstrahierte Darstellung gemäß Figur 2 vorgesehen, dass der Hochtemperatur-PEM-Brennstoffzellenstack 2 beidseitig zu seinen Einzelzellen 4 als Kanalstruktur ausgebildete, die Mittel zur Kühlung bildende Kühlelemente 5 aufweist. Typischerweise handelt es sich bei diesen Kühlelementen 5 um sogenannte kühlmediumdurchströmte Verteilerplatten (siehe DE 103 15 758 A1), die jeweils ein Anoden-Kathoden-Paar umschließen. Zur Fluidversorgung weisen die Kühlelemente 5 bzw. die Fluidverteilerplatten mindestens einen Zufuhr- 6 und mindestens einen Abfuhranschluss 7 für das Kühlmedium auf.

Gemäß der Ausführungsform nach Figur 1 ist dabei vorgesehen, dass der Abfuhranschluss 7 der Kühlelemente 5 hydraulisch mit einem Wasserdampfzufuhranschluss 8 an der Reformerstufe 1 verbunden ist, d. h. in den Hochtemperatur-PEM-Brennstoffzellenstack eintretendes Kühlwasser wird im Stack verdampft und dann direkt der Reformerstufe 1 für den Reformierungsprozess zugeführt. Mit anderen, verfahrensmäßigen Worten ausgedrückt, ist vorgesehen, dass zur Kühlung der Hochtemperatur-PEM-Brennstoffzelle 2 Wasser verwendet und dieses mindestens teilweise nach seiner Verdampfung der Reformerstufe 1 als Wasserdampf zugeführt wird.

Bezüglich der Maßgabe "teilweise" ist dabei zu berücksichtigen, dass es je nach Auslegung der Gesamtanlage sein kann, dass zur Kühlung der Brennstoffzelle mehr Wasser als für den Reformierungsprozess erforderlich ist. In diesem Fall ist ferner vorgesehen, dass zwischen dem Abfuhranschluss 7 der Kühlelemente 5 und dem Wasserdampfzufuhranschluss 8 eine hydraulische Verzweigung 9 angeordnet ist, d. h. möglicherweise für den Reformierungsprozess überflüssiger Wasserdampf kann bedarfsangepasst separiert und beispielsweise wieder dem Kühlkreislauf der Brennstoffzelle zugeführt werden.

Aus den obigen Ausführungen zu Figur 1 geht hervor, dass bei dieser Ausführungsform das Mittel zur Kühlung den Verdampfer 3 selbst umfasst. Mit anderen Worten ausgedrückt, bilden die Kühlelemente 5 den Verdampfer 3, d. h. das über den Zufuhranschluss 6 eintretende Wasser wird in der Brennstoffzelle selbst verdampft und über den Abfuhranschluss 7 und eine entsprechende Verbindungsleitung der Reformerstufe 1 dampfförmig zugeführt.

Bei der alternativen Ausführungsform gemäß Figur 3 ist vorgesehen, dass dem Abfuhranschluss 7 der Kühlelemente 5 hydraulisch ein den Verdampfer 3 bildender Wärmetauscher nachgeschaltet ist, der einerseits vom Kühlmedium und andererseits von Wasser durchströmbar ausgebildet und seinerseits wasserseitig mit einem Wasserdampfzufuhranschluss 8 an der Reformerstufe 1 verbunden ist. Mit anderen Worten ausgedrückt, ist bei diese Variante ein separater Wärmetauscher zwischengeschaltet, was beispielsweise dann sinnvoll sein kann, wenn als Kühlmedium kein Wasser (stattdessen beispielsweise Öl) verwendet wird. Verfahrensmäßig ausgedrückt, ist bei dieser Variante der Erfindung also schließlich vorgesehen, dass zur Kühlung der Hochtemperatur-PEM-Brennstoffzelle 2 ein Kühlmedium verwendet und bei der Kühlung aufgenommene Wärme vom Kühlmedium per Wärmetauscher auf der Reformerstufe 1 zuzuführendes und zu verdampfendes Wasser übertragen wird.

### Bezugezeichenliste

- 1: Reformerstufe
- 2: Hochtemperatur-PEM-Brennstoffzellenstack
- 3: verdampfer
- 4: Einzelzelle
- 5: Kühlelement
- 6: Zufuhranschluss
- 7: Abfuhranschluss
- 8: Wasserdampfzufuhranschluss
- 9: Verzweigung
- 10: Shiftstufe

## Patentansprüche

1. Brennstoffzellenanlage, umfassend
- eine Reformerstufe (1) zur Dampfreformierung von Kohlenwasserstoffgas und Wasserdampf in Wasserstoff und weitere Reformerprodukte, wobei der Reformerstufe (1) zur Erzeugung des Wasserdampfes ein Verdampfer (3) vorgeschaltet ist,
- mindestens einen der Reformerstufe (1) nachgeschalteten, mit einem Mittel zur Kühlung versehenen Hochtemperatur-PEM-Brennstoffzellenstack (2),
**dadurch gekennzeichnet,**
**dass** das Mittel zur Kühlung des Hochtemperatur-PEM-Brennstoffzellenstacks (2) thermisch mit dem Verdampfer (3) der Reformerstufe (1) verbunden ist.

2. Brennstoffzellenanlage nach Anspruch 1,
**dadurch gekennzeichnet,**
**dass** der Hochtemperatur-PEM-Brennstoffzellenstack (2) beidseitig zu seinen Einzelzellen (4) als Kanalstruktur ausgebildete, die Mittel zur Kühlung bildende Kühlelemente (5) aufweist.

3. Brennstoffzellenanlage nach Anspruch 2,
**dadurch gekennzeichnet,**
**dass** die Kühlelemente (5) mindestens einen Zufuhr- (6) und mindestens einen Abfuhranschluss (7) für ein Kühlmedium aufweisen.

4. Brennstoffzellenanlage nach Anspruch 3,
**dadurch gekennzeichnet,**
**dass** der Abfuhranschluss (7) der Kühlelemente (5) hydraulisch mit einem Wasserdampfzufuhranschluss (8) an der Reformerstufe (1) verbunden ist.

5. Brennstoffzellenanlage nach Anspruch 4,
**dadurch gekennzeichnet,**
**dass** zwischen dem Abfuhranschluss (7) der Kühlelemente (5) und dem Wasserdampfzufuhranschluss (8) eine hydraulische Verzweigung (9) vorgesehen ist.

6. Brennstoffzellenanlage nach einem der Ansprüche 1 bis 5,
**dadurch gekennzeichnet,**
**dass** das Mittel zur Kühlung den Verdampfer (3) umfasst.

7. Brennstoffzellenanlage nach einem der Ansprüche 2 bis 6,
**dadurch gekennzeichnet,**
**dass** die Kühlelemente (5) den Verdampfer (3) bilden.

8. Brennstoffzellenanlage nach Anspruch 4,
**dadurch gekennzeichnet,**
**dass** dem Abfuhranschluss (7) der Kühlelemente (5) hydraulisch ein den Verdampfer (3) bildender Wärmetauscher nachgeschaltet ist, der einerseits vom Kühlmedium und andererseits von Wasser durchströmbar ausgebildet und seinerseits wasserseitig mit einem Wasserdampfzufuhranschluss (8) an der Reformerstufe (1) verbunden ist.

9. Verfahren zum Betrieb einer Brennstoffzellenanlage nach Anspruch 1,
**dadurch gekennzeichnet,**
**dass** Abwärme vom Hochtemperatur-PEM-Brennstoffzellenstack (2) dem Verdampfer (3) zur Erzeugung des Wasserdampfes für die Reformerstufe (1) zugeführt wird.

10. Verfahren nach Anspruch 9,
**dadurch gekennzeichnet,**
**dass** zur Kühlung der Hochtemperatur-PEM-Brennstoffzelle (2) Wasser verwendet und dieses mindestens teilweise nach seiner Verdampfung der Reformerstufe (1) als Wasserdampf zugeführt wird.

11. Verfahren nach Anspruch 9,
**dadurch gekennzeichnet,**
**dass** zur Kühlung der Hochtemperatur-PEM-Brennstoffzelle (2) ein Kühlmedium verwendet und bei der Kühlung aufgenommene Wärme vom Kühlmedium per Wärmetauscher auf der Reformerstufe (1) zuzuführendes und zu verdampfendes Wasser übertragen wird.
